# EUROPÄISCHE PATENTSCHRIFT

(11) **EP 3 529 512 B1**
(45) Veröffentlichungstag und Bekanntmachung des Hinweises auf die Patenterteilung: **19.08.2020**
(21) Anmeldenummer: 17771415.1
(22) Anmeldetag: 19.09.2017
(51) Int. Cl.: F16D 43/14, F16D 11/16

(54) **KUPPLUNGSANORDNUNG FÜR EIN HYBRIDFAHRZEUG MIT EINER REIBUNGSKUPPLUNG UND EINER FLIEHKRAFTKUPPLUNG**
CLUTCH ASSEMBLY FOR A HYBRID VEHICLE HAVING A FRICTION CLUTCH AND A CENTRIFUGAL CLUTCH
ENSEMBLE EMBRAYAGE POUR VÉHICULE HYBRIDE COMPRENANT UN EMBRAYAGE À FRICTION ET UN EMBRAYAGE CENTRIFUGE

(30) Priorität: 21.10.2016 DE 102016220711
(43) Veröffentlichungstag der Anmeldung: 28.08.2019
(73) Patentinhaber: ZF Friedrichshafen AG, 88046 Friedrichshafen (DE)
(72) Erfinder: VIERNEKES, Gerald, 97437 Hassfurt (DE); DEPPERT, Reinhard, 97469 Gochsheim (DE); LUDSTECK, Sven, 97702 Münnerstadt (DE)
(74) Vertreter: ZF Friedrichshafen AG
(86) Internationale Anmeldenummer: PCT/EP2017/073536
(87) Internationale Veröffentlichungsnummer: WO 2018/072944

(56) Entgegenhaltungen:
- WO-A1-86/02981
- DE-A1-102009 045 562
- DE-A1-102011 080 454
- DE-A1-102012 221 881
- DE-A1-102015 201 931

## Beschreibung

Die vorliegende Erfindung bezieht sich auf eine Kupplungsanordnung für ein Hybridfahrzeug gemäß dem Oberbegriff von Patentanspruch 1.

Eine gattungsgemäße Kupplungsanordnung mit einer Formschlusskupplung und einer dazu funktional parallel angeordneten Reibungskupplung geht bereits aus der DE 10 2015 201 931 A1 hervor und ist dort zwischen einem Verbrennungsmotor und einer elektrischen Maschine angeordnet, um beispielsweise den Verbrennungsmotor bei elektrischem Fahrbetrieb mittels der Reibungskupplung an die elektrische Maschine anzukoppeln und diesen zu starten. Sobald eine Synchronisation von Kurbelwelle und Rotorwelle vorliegt, kann die Formschlusskupplung durch Ineinandergreifen einer Verzahnungsanordnung geschlossen werden, um darüber das Antriebsmoment des Verbrennungsmotors an die Fahrzeugräder zu leiten. Zur Betätigung von Formschlusskupplung und Reibungskupplung ist ein gemeinsames Betätigungsmittel in Form eines hydraulischen oder elektromotorischen Aktors vorgesehen, wobei bei dessen Aktivierung eine stufenweise Kupplungsbetätigung erfolgt und zuerst die Elemente der Reibeinheit und danach bei erfolgter Synchronisierung der beteiligten Wellen die Elemente der Formschlusseinheit miteinander in Eingriff gebracht werden.

Infolge der stufenweisen wegabhängigen Betätigung kann es bei dieser Anordnung zu einem unerwünschten vorzeitigen Schließen der Formschlusskupplung kommen und zwar bevor die Reibungskupplung vollständig geschlossen ist, was wegen der konstruktiven Ausgestaltung der Formschlusskupplung den Fahrkomfort ungünstig beeinflussen kann.

Eine Freilauftrennkupplung mit einer Reibungskupplung und einer parallel angeordneten Fliehkraftkupplung ist aus DE 10 2011 080 454 A1 bekannt.

Der vorliegenden Erfindung liegt von dem genannten Stand der Technik die Aufgabe zugrunde, eine gattungsgemäße Kupplungsanordnung darzustellen, welche das vorstehend genannte Problem sicher vermeidet.

Diese Aufgabe wird durch eine Kupplungsanordnung mit den Merkmalen des Patentanspruchs 1 gelöst.

Vorteilhafte Ausgestaltungen und Weiterbildungen der Erfindung sind den abhängigen Ansprüchen sowie der nachfolgenden Figurenbeschreibung entnehmbar.

Es wird demnach eine Kupplungsanordnung für ein Hybridfahrzeug vorgeschlagen, welche eine Eingangswelle und eine dazu koaxial angeordnete Ausgangswelle und weiter eine Reibungskupplung und eine Formschlusskupplung umfasst, welche funktional parallel zwischen der Eingangswelle und der Ausgangswelle angeordnet sind und wobei die Reibungskupplung eine durch Betätigungsmittel betätigbare Reibeinheit und die Formschlusskupplung eine durch zugeordnete Betätigungsmittel betätigbare Formschlusseinheit aufweist.

Gemäß der Erfindung zeichnet sich die Kupplungsanordnung dadurch aus, dass die Formschlusskupplung als Fliehkraftkupplung zur drehzahlabhängigen selbsttägigen Betätigung ausgebildet ist, wobei die zugeordneten Betätigungsmittel mit der Eingangswelle oder der Ausgangswelle wirkverbunden sind.

Durch diese Ausgestaltung ergibt sich der grundlegende Vorteil, dass die Formschlusskupplung erst dann selbsttätig vom geöffneten in den geschlossenen Zustand übergeht, wenn eine vorgegebene Drehzahl überschritten wird. Beispielweise kann das Schließen der Reibungskupplung bei einer ersten vorgebbaren Drehzahl (Reibungskoppeldrehzahl) einer drehenden Welle erfolgen, welche die Ausgangs- oder die Eingangswelle sein kann, wobei die jeweils anzukoppelnde andere Welle durch den Koppelvorgang auf das Drehzahlniveau der drehenden Welle angehoben werden soll. Mit anderen Worten soll im Ergebnis eine Drehzahlgleichheit von Eingangswelle und Ausgangswelle vorliegen. Das Schließen der Fliehkraftkupplung kann dabei bereits in einem Zustand vorgenommen werden, bei welchem noch eine gewisse, insbesondere eine geringe Drehzahldifferenz in Form einer kleineren Drehzahl der anzukoppelnden Welle an die drehende Welle vorhanden ist und wobei eine vergleichsweise geringe Relativbewegung von Eingangswelle und Ausgangswelle auftritt. Wenn in diesem Zustand eine festgelegte Fliehkraftkoppeldrehzahl der Fliehkraftkupplung erreicht wird, so können nun im Verlauf der Relativdrehbewegung bei Einnahme einer drehstellungsabhängigen Formschlusskoppelstellung die zu koppelnde Elemente selbsttätig in eine drehfeste formschlüssige Mitnahme gelangen. Auf diese Weise kann durch die Reibungskupplung solange eine zunehmende Drehzahlangleichung von Eingangs- und Ausgangswelle erfolgen, wobei vor Erreichung einer Synchrondrehzahl der Wellen die Formschlusskupplung geschlossen wird.

Die Reibungskupplung kann grundsätzlich als normal-offen oder als normalgeschlossen Typ ausgeführt werden, während die Formschlusskupplung als normal-offen Typ ausgeführt ist und erst bei Erreichen der Fliehkraftkoppeldrehzahl von einer der beteiligten Wellen selbsttätig geschlossen wird.

Die Formschlusseinheit kann mit Vorteil zumindest ein verlagerbares erstes Element, insbesondere eine Klinke mit einem ersten Formschlussprofil und ein zweites Element, insbesondere ein Klinkenrad mit einem zweiten Formschlussprofil aufweisen, wobei das erste Element mit der Eingangswelle und das zweite Element mit der Ausgangswelle in Drehmitnahmeverbindung steht und wobei die Formschlussprofile durch das Überschreiten der Formschlusskoppeldrehzahl durch Fliehkraftwirkung gegenseitig in Eingriff bringbar sind.

Gemäß einer vorteilhaften Ausgestaltung der Kupplungsanordnung können die Betätigungsmittel zur elektromagnetischen Betätigung der Reibungskupplungen ausgebildet sein. Ein zu diesem Zweck vorgesehener Elektromagnet kann mir Vorteil als ein konzentrisch zu der Eingangs- bzw. Ausgangswelle ausgebildeter Ringmagnet ausgebildet sein, der mit einem axial verlagerbaren Magnetanker und mit einem verlagerbaren Kupplungselement von der Reibungskupplung zusammenwirkt, wie dieses nachstehend erläutert wird.

Mit Vorteil kann die Reibeinheit eine axial verlagerbare Anpressplatte, eine Widerlageranordnung mit einer Gegenanpressplatte und eine zwischen diesen angeordnete Reibscheibe aufweisen, wobei die Anpressplatte und die Gegenanpressplatte mit der Eingangswelle oder der Ausgangswelle und wobei die Reibscheibe mit der jeweils anderen von Eingangswelle und Ausgangswelle in Drehmitnahmeverbindung steht.

Eine insbesondere axial bauraumsparende Anordnung kann erzielt werden, indem die Formschlusskupplung und die Reibungskupplung radial gestaffelt zueinander angeordnet werden und sich gegenseitig zumindest teilweise axial überlappen. Insbesondere können dabei die Reibeinheit und die Formschlusseinheit radial gestaffelt zueinander angeordnet sein und sich zumindest teilweise axial überlappen, wobei insbesondere die Formschlusseinheit radial innerhalb der Reibeinheit angeordnet ist.

Gemäß einer Weiterbildung der Erfindung kann bei der Kupplungsanordnung eine elektrische Maschine mit einem Rotor und mit einem Stator vorgesehen sein, wobei der Rotor mit der Ausgangswelle in Drehmitnahmeverbindung steht und wobei die elektrische Maschine einen zentralen Aufnahmeraum aufweist, in welchem die Reibungskupplung und die Formschlusskupplung vollständig oder zumindest teilweise aufgenommen sind.

Davon ausgehend kann mit Vorteil die Widerlageranordnung der Reibungskupplung am Rotor ausgebildet sein. Mit anderen Worten kann die elektrische Maschine einen Teil der Reibungskupplung ausbilden.

Mit noch weiterem Vorteil kann der Stator einen Statorträger mit einem den Aufnahmeraum begrenzenden Radialwandbereich umfassen oder der Aufnahmeraum kann benachbart zu einem Radialwandbereich einer weiteren Komponente angeordnet sein, an welchem die Betätigungsmittel der Reibungskupplung und der Formschlusskupplung festgelegt werden können.

Eine räumlich gegenüber weiteren Antriebsstrangkomponenten abgegrenzte Kupplungsanordnung kann erzielt werden, indem der Rotor einen sich radial erstreckenden Rotorträger aufweist, wobei der Aufnahmeraum von Reibungskupplung und Formschlusskupplung und von deren Betätigungseinheiten axial zwischen dem besagten Radialwandbereich und dem Rotorträger ausgebildet ist.

Mit weiterem Vorteil kann die Reibungskupplung eine elektronische Ansteuereinheit zur Ansteuerung der Betätigungsmittel aufweisen, wobei die Ansteuereinheit an dem Radialwandbereich, insbesondere innerhalb des Aufnahmeraums angeordnet ist.

Gemäß einem vorteilhaften Lagerungskonzept der Kupplungsanordnung kann vorgesehen sein, die Eingangswelle an dem Radialwandbereich und die Ausgangswelle zweifach zur Eingangswelle zu lagern. Im Weiteren kann die Ausgangswelle an einem Eingangsbereich einer im Drehmomentfluss nachfolgenden Komponente eines vorliegenden Antriebstrangs gelagert sein. Beispielsweise kann die Ausgangswelle zumindest mittelbar mit einer Eingangswelle eines Gangwechselgetriebes verbunden und durch diese gelagert sein.

Für eine bauliche Integration einer elektrischen Maschine in die Kupplungsanordnung kann vorteilhaft die elektrische Maschine ist als Innenläufer ausgebildet sein, wobei der Rotor radial innerhalb des Stators angeordnet ist. Dabei kann die Außenumfangsfläche des Rotors in bekannter Weise über einen radialen Luftspalt mit dem Stator zusammenwirken und die Innenumfangsfläche des Rotors kann die Widerlageranordnung der Reibungskupplung tragen oder ausbilden.

Insgesamt kann die Kupplungsanordnung als ein räumlich kompaktes und separates Modul zum Einbau in einen Fahrzeugantriebsstrang ausgebildet sein, wobei sich deren einzelne Elemente gegenseitig abstützen und eine feste Lagezuordnung aufweisen.

Es zeigen:
- Fig. 1: eine Schnittdarstellung einer Kupplungsanordnung mit einer normal-offenen Reibungskupplung, einer als Fliehkraftkupplung ausgebildeten Formschlusskupplung und einer elektrischen Maschine;
- Fig. 2: eine Radialschnittdarstellung der Fliehkraftkupplung in einem geöffneten Zustand;
- Fig. 3: eine Radialschnittdarstellung der Fliehkraftkupplung in einem geschlossenen Zustand.

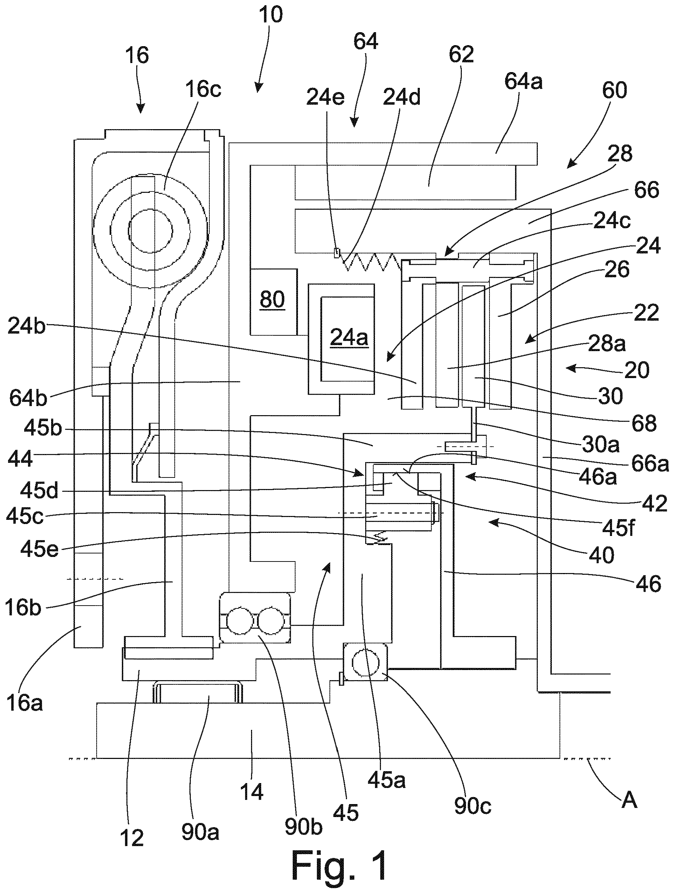

Fig. 1 zeigt eine Kupplungsanordnung 10 für ein Hybridfahrzeug, welche zunächst eine Eingangswelle 12 und eine dazu koaxial angeordnete Ausgangswelle 14 und eine Reibungskupplung 20 und eine Formschlusskupplung 40 umfasst, welche funktional parallel zwischen der Eingangswelle 12 und der Ausgangswelle 14 angeordnet sind. Der Kupplungsanordnung 10 ist vorliegend ein Torsionsdämpfer 16 in Form eines Zweimassenschwungrades vorgeschaltet, welches mit einer Eingangsseite 16a zur Verbindung mit der Kurbelwelle eines Verbrennungsmotors vorgesehen ist. Die Eingangsseite 16a ist unter Zwischenschaltung von mehreren als Schraubendruckfedern ausgeführten Energiespeichern 16c mit einer Ausgangsseite 16b verbunden, welche im Weiteren mittels einer Steckverzahnung mit der Eingangswelle 12 in Drehmitnahme steht.

Die Kupplungsanordnung 10 umfasst weiter eine elektrische Maschine 60 mit einem Stator 62 und mit einem Rotor 66, welcher mit der Ausgangswelle 14 verbunden ist und in Drehmitnahmeverbindung steht. Innerhalb der elektrischen Maschine 60 ist ein zentraler Aufnahmeraum 68 vorgesehen, in welchem die Reibungskupplung 20 und die Formschlusskupplung 40 vollständig aufgenommen sind. Die elektrische Maschine 60 ist hier als Innenläufer ausgebildet, wobei der Rotor 66 radial innerhalb des Stators 62 angeordnet und drehbar um eine Achse A ist und wobei der Aufnahmeraum 68 zur Aufnahme der Kupplungen 40, 60 im Wesentlichen innerhalb des Rotors 66 vorliegt.

Der Stator 62 umfasst einen Statorträger 64 mit einem sich axial erstreckenden Zylinderwandbereich 64a zur Anordnung einer elektromagnetischen Statorkomponente und weiter einen den Aufnahmeraum 68 einseitig begrenzenden Radialwandbereich 64b. Eine Drehmomentabstützung des Statorträgers 64 kann beispielsweise an einem hier nicht zeichnerisch nicht dargestellten Getriebegehäuse oder einer anderen zu den Wellen 12, 14 und dem Rotor 66 drehentkoppelten Komponente erfolgen.

Der Rotor 66 weist einen sich radial erstreckenden Rotorträger 66a auf, wobei wie in Fig. 1 erkennbar, der Aufnahmeraum 68 axial zwischen dem Radialwandbereich 64b und dem Rotorträger 66a ausgebildet und axial beidseitig abgeschlossen ist.

Die Reibungskupplung 20 weist eine Reibeinheit 22 auf, welche durch ein zur elektromagnetischen Betätigung ausgebildetes Betätigungsmittel 24 betätigbar ist. Die Betätigungsmittel 24 umfassen einen ringförmigen um die Drehachse A ausgebildeten Elektromagnet 24a dessen Magnetfeld bei einer Strombeaufschlagung im Wesentlichen in axialer Richtung aus einer U-förmig ausgeführten Gehäuseschale austreten kann. Der Elektromagnet 24a ist am Radialwandbereich 64b des Statorträgers 64 festgelegt und dort in einen dafür geschaffenen Aufnahmebereich eingesetzt.

Die Reibungskupplung 20 und die Formschlusskupplung 40 sind in dem mit Fig. 1 erläuterten Ausführungsbeispiel beide vom normal-offen Typ.

Die Reibeinheit 22 der trockenlaufenden Reibungskupplung 20 umfasst eine axial verlagerbare Anpressplatte 26, eine Widerlageranordnung 28 mit einer ringscheibenförmigen Gegenanpressplatte 28a und eine zwischen diesen angeordnete Reibscheibe 30 mit einem Trägerbereich 30a.

Die Anpressplatte 26 und die Gegenanpressplatte 28a stehen über den Rotorträger 66a mit der Ausgangswelle 14 und die Reibscheibe 30 steht mit der Eingangswelle 12 in Drehmitnahmeverbindung. Die Widerlageranordnung 28 mit der Gegenanpressplatte 28a der Reibungskupplung 20 ist an einem sich axial erstreckenden Abschnitt des Rotorträgers 66a am und drehfest zum Rotor 66 ausgebildet. Zur Ermöglichung eines Reibschlusses ist die Anpressplatte 26 einerseits innerhalb des Rotors 66 axial verlagerbar eingesetzt und andererseits mittels mehrerer am Umfang verteilter und axial abstehender Zugbolzen 24c, welche durch entsprechende Ausnehmungen der Gegenanpressplatte 28a geführt sind mit einem gleichfalls ringscheibenförmigen Magnetanker 24b fest verbunden. Dadurch kann bei einer Aktivierung des Elektromagneten 24a eine Zugkraft auf den Magnetanker 24b und die Anpressplatte 26 übertragen und die Reibscheibe 30 reibschlüssig zwischen der Anpressplatte 26 und der Gegenanpressplatte 28a zum Schließen der Reibungskupplung 20 eingeklemmt werden. Zur Ermöglichung einer Rückstellbewegung der Anpressplatte 26 ist ein als Druckfeder ausgebildetes Rückstellelement 24d zwischen dem Magnetanker 24b und einer Abstützung 24e vorgesehen.

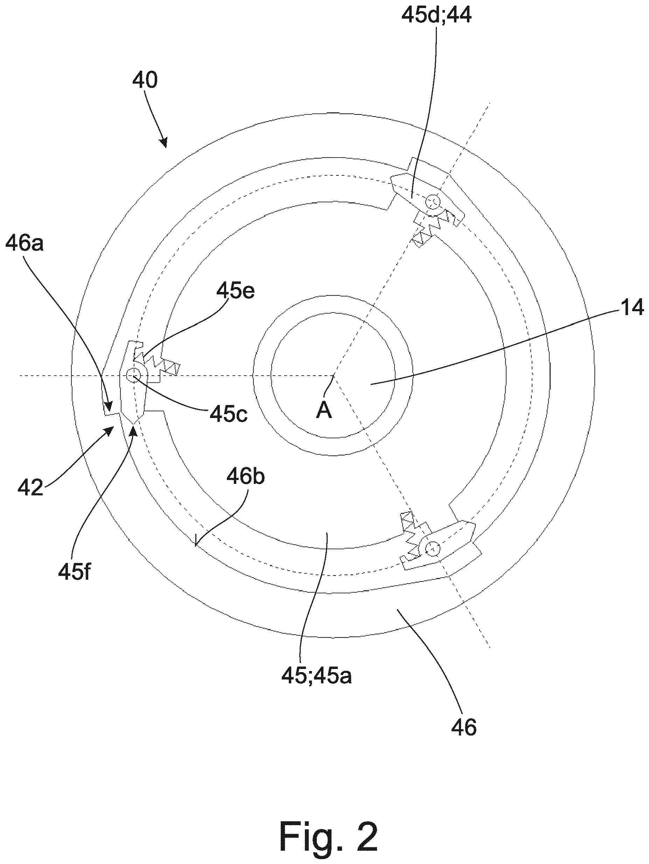

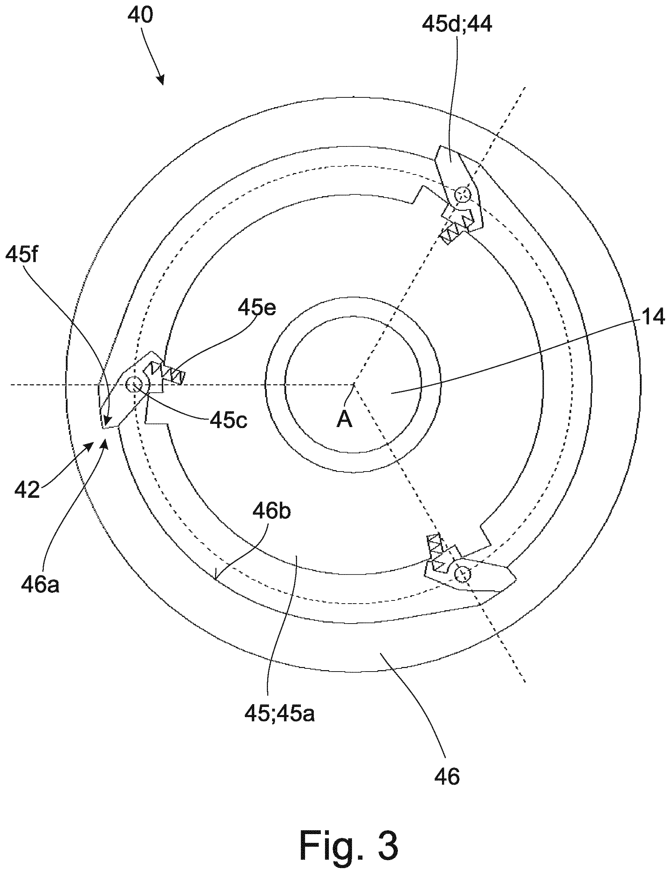

Die Formschlusskupplung 40 umfasst ein mit der Eingangswelle 12 verbundenes Trägerrad 45 mit einem scheibenförmigen Abschnitt 45a und mit einem sich an dessen Außenumfang anschließenden hohlzylindrischen Abschnitt 45b. An dem scheibenförmigen Abschnitt 45a sind mittels Zapfen 45c mehrere am Umfang verteilte Klinken 45d gelagert, welche sich unter dem Einfluss einer wirkenden Fliehkraft entgegen der Wirkung von als Druckfedern ausgebildeten Rückstelleelementen 45e verschwenken können und dabei mit einem an diesen ausgebildeten ersten Formschlussprofil 45f nach radial außen verlagern können, wie dieses besonders anhand der Fig. 2, 3 erkennbar ist. Das erste Formschlussprofil 45f kann somit jeweils arretierend in ein dazu korrespondierendes zweites Formschlussprofil 46a eingreifen, welches als Ausnehmungen an einer Innenumfangsfläche 46b eines als Hohlrad ausgebildeten Klinkenrades 46 vorhanden ist. Durch das Ineinandergreifen der Formschlussprofile 45f, 46a wird in einer Drehrichtung des Trägerrades 45, hier linksdrehend, eine Drehmitnahme des Klinkenrades 46 ermöglicht, während in der Gegendrehrichtung die Klinken 45d infolge der nicht-formschlüssigen Formgebung des Klinkenrades 45 abgewiesen werden und nicht einrasten können.

Die Klinken 45d mit dem ersten Formschlussprofil 45f und das Klinkenrad 46 mit dem zweiten Formschlussprofil 46a bilden gemeinsam eine Formschlusseinheit 42, welche durch die hier zudem als Betätigungsmittel 44 fungierenden und vorliegend mit der Eingangswelle 12 wirkverbundenen und verschwenkbaren Klinken 45d fliehkraftbedingt betätigt werden. Der hohlzylindrische Abschnitt 45b ist axial endseitig mit dem Trägerbereich 30a der Reibscheibe 30 und das Klinkenrad 45 ist vorliegend mittels einer Steckverzahnung oder einer Verschweißung drehfest mit der Ausgangswelle 14 verbunden.

Der Eingriff der Formschlussprofile 45f, 46a und die gegenseitige Drehmitnahme der Wellen 12, 14 kann bei Unterschreiten einer Formschlusskoppeldrehzahl in Verbindung mit einer zumindest kurzzeitigen gegenseitigen Drehmomententlastung aufgehoben werden, wobei die Klinken 45d durch die Wirkung der Rückstellelemente 45e wieder zurück in deren in Fig. 2 dargestellte Ausgangslage gelangen.

In Fig. 1 ist erkennbar, dass die Formschlusskupplung 40 und die Reibungskupplung 20 radial gestaffelt zueinander angeordnet sind und sich gegenseitig zumindest teilweise axial überlappen. Insbesondere sind die Reibeinheit 22 und die Formschlusseinheit 42 radial gestaffelt zueinander angeordnet und können sich zumindest teilweise axial überlappen, wobei insbesondere die Formschlusseinheit 42 radial innerhalb der Reibeinheit 22 angeordnet ist.

Die Reibungskupplung 20 weist weiterhin eine elektronische Ansteuereinheit 80 zur Ansteuerung der Betätigungsmittel 24, insbesondere des Elektromagnete 24a auf. Die Ansteuereinheit 80 ist räumlich unmittelbar benachbart zu dem Elektromagnet 24a an dem Radialwandbereich 64b, insbesondere innerhalb des Aufnahmeraums 68 angeordnet ist.

Es ist ferner erkennbar, dass die Eingangswelle 12 mittels eines Wälzlagers 90b an dem Radialwandbereich 64b und die Ausgangswelle 14 mittels der Wälzlager 90a, 90c zweifach zur Eingangswelle 12 gelagert ist, wobei die Ausgangswelle 14 im eingebauten Zustand der Kupplungsanordnung 10 in einem Fahrzeug zumindest mittelbar mit einer Eingangswelle eines Gangwechselgetriebes verbunden und durch diese gelagert sein.

Bei der erläuterten Kupplungsanordnung 10 wird zum Starten eines mit der Eingangswelle 12 gekoppelten Verbrennungsmotors eines Hybridfahrzeuges bei elektromotorischen Fahrbetrieb zunächst die Reibungskupplung 20 geschlossen und dabei der Verbrennungsmotor unter Hochschleppen von dessen Kurbelwelle angeworfen. Kurz vor Erreichen einer Synchrondrehzahl von Eingangs- und Ausgangswelle und damit der Einnahme einer drehfesten Koppelung von Eingangs- 12 und Ausgangswelle 14 wird bei Erreichen einer vorgegebenen Formschlusskoppeldrehzahl die Formschlusskupplung 20 selbsttätig geschlossen.

Da die Formschlusskupplung 40 zur vollständigen Übertragung des Antriebsmomentes des Verbrennungsmotors ausgelegt ist, ist die Reibungskupplung 20 dadurch entlastet und kann deaktiviert werden, was jedoch nicht zwangsweise erfolgen muss. Das heißt, dass der Reibschluss bzw. die Koppelung auch bei geschlossener Formschlusskupplung 20 aufrechterhalten werden kann.

### Bezugszeichen

| | | | |
|---|---|---|---|
| 10 | Kupplungsanordnung | | |
| 12 | Eingangswelle | 44c | Rückstellelement |
| 14 | Ausgangswelle | 45 | Trägerrad |
| 16 | Torsionsdämpfer | 45a | scheibenförmiger Abschnitt |
| 16a | Eingangsseite | 45b | hohlzylindrischer Abschnitt |
| 16b | Ausgangsseite | 45c | Zapfen |
| 16c | Energiespeicher | 45d | Klinke |
| 20 | Reibungskupplung | 45e | Rückstellelement |
| 22 | Reibeinheit | 45f | erstes Formschlussprofil |
| 24 | Betätigungsmittel | 46 | Klinkenrad |
| 24a | Elektromagnet | 46a | zweites Formschlussprofil |
| 24b | Magnetanker | 46b | Innenumfangsfläche |
| 24c | Zugbolzen | 60 | elektrische Maschine |
| 24d | Rückstellelement | 62 | Stator |
| 24e | Abstützung | 64 | Statorträger |
| 26 | Anpressplatte | 64a | Zylinderwandbereich |
| 28 | Widerlageranordnung | 64b | Radialwandbereich |
| 28a | Gegenanpressplatte | 66 | Rotor |
| 30 | Reibscheibe | 66a | Rotorträger |
| 30a | Trägerbereich | 68 | Aufnahmeraum |
| 40 | Formschlusskupplung | 80 | Ansteuereinheit |
| 42 | Formschlusseinheit | 90a-c | Lager |
| 44 | Betätigungsmittel | A | Drehachse |

## Patentansprüche

1. Kupplungsanordnung (10) für ein Hybridfahrzeug, umfassend
- eine Eingangswelle (12) und eine dazu koaxial angeordnete Ausgangswelle (14),
- eine Reibungskupplung (20) und eine Formschlusskupplung (40), welche funktional parallel zwischen der Eingangswelle (12) und der Ausgangswelle (14) angeordnet sind, wobei
- die Reibungskupplung (20) eine durch zugeordnete Betätigungsmittel (24) betätigbare Reibeinheit (22) aufweist, und wobei
- die Formschlusskupplung (40) eine durch zugeordnete Betätigungsmittel (44) betätigbare Formschlusseinheit (42) aufweist,
**dadurch gekennzeichnet, dass** die Formschlusskupplung (40) als Fliehkraftkupplung zur drehzahlabhängigen selbsttägigen Betätigung ausgebildet ist, wobei die zugeordneten Betätigungsmittel (44) mit der Eingangswelle (12) oder der Ausgangswelle (14) wirkverbunden sind.

2. Kupplungsanordnung nach einem der Ansprüche 1-3, **dadurch gekennzeichnet, dass** die Formschlusseinheit (42) ein verlagerbares erstes Element (45d) mit einem ersten Formschlussprofil (45f) und ein zweites Element (46) mit einem zweiten Formschlussprofil (46a) aufweist, wobei das erste Element (45d) mit der Eingangswelle (12) und das zweite Element (46) mit der Ausgangswelle (14) in Drehmitnahmeverbindung steht und wobei die Formschlussprofile (45f, 46a) durch das Überschreiten einer vorgebbaren Fliehkraftkoppelrehzahl durch Fliehkraftwirkung gegenseitig in Eingriff bringbar sind.

3. Kupplungsanordnung nach Anspruch 1, **dadurch gekennzeichnet, dass** das Betätigungsmittel (24) der Reibungskupplung (20) zur elektromagnetischen Betätigung ausgebildet ist.

4. Kupplungsanordnung nach einem Anspruch 1 oder 2, **dadurch gekennzeichnet, dass** die Reibeinheit (22) eine axial verlagerbare Anpressplatte (26), eine Widerlageranordnung (28) mit einer Gegenanpressplatte (28a) und eine zwischen diesen angeordnete Reibscheibe (30) aufweist, wobei die Anpressplatte (26) und die Gegenanpressplatte (28a) mit der Eingangswelle (12) oder der Ausgangswelle (14) und wobei die Reibscheibe (30) mit der jeweils anderen von Eingangswelle (12) und Ausgangswelle (14) in Drehmitnahmeverbindung steht.

5. Kupplungsanordnung nach einem der Ansprüche 1-4, **dadurch gekennzeichnet, dass** die Formschlusskupplung (40) und die Reibungskupplung (20) radial gestaffelt zueinander angeordnet sind und sich gegenseitig zumindest teilweise axial überlappen.

6. Kupplungsanordnung nach einem der Ansprüche 1-5, **dadurch gekennzeichnet, dass** eine elektrische Maschine (60) mit einem Rotor (66) und mit einem Stator (62) vorgesehen ist, wobei der Rotor (66) mit der Ausgangswelle (14) in Drehmitnahmeverbindung steht und wobei die elektrische Maschine (60) einen zentralen Aufnahmeraum (68) aufweist, in welchem die Reibungskupplung (20) und die Formschlusskupplung (40) vollständig oder zumindest teilweise aufgenommen sind.

7. Kupplungsanordnung nach Anspruch 6, **dadurch gekennzeichnet, dass** die Widerlageranordnung (28) der Reibungskupplung (20) am Rotor (66) ausgebildet ist.

8. Kupplungsanordnung nach Anspruch 6 oder 7, **dadurch gekennzeichnet, dass** der Stator (62) einen Statorträger (64) mit einem den Aufnahmeraum (68) begrenzenden Radialwandbereich (64b) umfasst oder dass der Aufnahmeraum (68) benachbart zu einem Radialwandbereich (64b) einer weiteren Komponente angeordnet ist, an welchem die Betätigungsmittel (24, 44) der Reibungskupplung (20) und der Formschlusskupplung (40) festgelegt sind.

9. Kupplungsanordnung nach einem der Ansprüche 6-8, **dadurch gekennzeichnet, dass** der Rotor (66) einen sich radial erstreckenden Rotorträger (66a) aufweist, wobei der Aufnahmeraum (68) axial zwischen dem Radialwandbereich (64b) und dem Rotorträger (68a) ausgebildet ist.

10. Kupplungsanordnung nach Anspruch 9, **dadurch gekennzeichnet, dass** Reibungskupplung (20) eine Ansteuereinheit (80) zur Ansteuerung der Betätigungsmittel (24) aufweist, wobei die Ansteuereinheit (80) an dem Radialwandbereich (64b), insbesondere innerhalb des Aufnahmeraums (68) angeordnet ist.

11. Kupplungsanordnung nach einem der Ansprüche 8-10, **dadurch gekennzeichnet, dass** die Eingangswelle (12) an dem Radialwandbereich (64b) und die Ausgangswelle (14) zweifach zur Eingangswelle (12) gelagert ist.

12. Kupplungsanordnung nach einem der Ansprüche 8-11, **dadurch gekennzeichnet**, die elektrische Maschine (60) ist als Innenläufer ausgebildet ist, wobei der Rotor (66) radial innerhalb des Stators (62) angeordnet ist.

## Claims

1. Clutch arrangement (10) for a hybrid vehicle, comprising
- an input shaft (12) and an output shaft (14) which is arranged coaxially with respect to the former,
- a friction clutch (20) and a positively locking clutch (40) which are arranged functionally in parallel between the input shaft (12) and the output shaft (14),
- the friction clutch (20) having a friction unit (22) which can be actuated by way of associated actuating means (24), and
- the positively locking clutch (40) having a positively locking unit (42) which can be actuated by way of associated actuating means (44), **characterized in that** the positively locking clutch (40) is configured as a centrifugal clutch for speed-dependent automatic actuation, the associated actuating means (44) being operatively connected to the input shaft (12) or the output shaft (14).

2. Clutch arrangement according to one of Claims 1 to 3, **characterized in that** the positively locking unit (42) has a movable first element (45d) with a first positively locking profile (45f) and a second element (46) with a second positively locking profile (46a), the first element (45d) being in a rotary driving connection with the input shaft (12), and the second element (46) being in a rotary driving connection with the output shaft (14), and it being possible for the positively locking profiles (45f, 46a) to be brought mutually into engagement by way of the centrifugal force action as a result of a predefinable centrifugal coupling rotational speed being exceeded.

3. Clutch arrangement according to Claim 1, **characterized in that** the actuating means (24) of the friction clutch (20) is configured for electromagnetic actuation.

4. Clutch arrangement according to Claim 1 or 2, **characterized in that** the friction unit (22) has an axially movable pressure plate (26), a thrust bearing arrangement (28) with a mating pressure plate (28a) and a friction disc (30) which is arranged between them, the pressure plate (26) and the mating pressure plate (28a) being in a rotary driving connection with the input shaft (12) or the output shaft (14), and the friction disc (30) being in a rotary driving connection with the respective other one of the input shaft (12) and the output shaft (14) .

5. Clutch arrangement according to one of Claims 1 to 4, **characterized in that** the positively locking clutch (40) and the friction clutch (20) are arranged in a radially staggered manner with respect to one another and overlap one another axially at least partially.

6. Clutch arrangement according to one of Claims 1 to 5, **characterized in that** an electric machine (60) with a rotor (66) and with a stator (62) is provided, the rotor (66) being in a rotary driving connection with the output shaft (14) and the electric machine (60) having a central receiving space (68), in which the friction clutch (20) and the positively locking clutch (40) are received completely or at least partially.

7. Clutch arrangement according to Claim 6, **characterized in that** the thrust bearing arrangement (28) of the friction clutch (20) is configured on the rotor (66) .

8. Clutch arrangement according to Claim 6 or 7, **characterized in that** the stator (62) comprises a stator carrier (64) with a radial wall region (64b) which delimits the receiving space (68), or **in that** the receiving space (68) is arranged adjacently with respect to a radial wall region (64b) of a further component, on which radial wall region (64b) the actuating means (24, 44) of the friction clutch (20) and of the positively locking clutch (40) are fixed.

9. Clutch arrangement according to one of Claims 6 to 8, **characterized in that** the rotor (66) has a radially extending rotor carrier (66a), the receiving space (68) being configured axially between the radial wall region (64b) and the rotor carrier (68a).

10. Clutch arrangement according to Claim 9, **characterized in that** the friction clutch (20) has an actuating unit (80) for the actuation of the actuating means (24), the actuating unit (80) being arranged on the radial wall region (64b), in particular within the receiving space (68).

11. Clutch arrangement according to one of Claims 8 to 10, **characterized in that** the input shaft (12) is mounted on the radial wall region (64b) and the output shaft (14) is mounted twice with respect to the input shaft (12).

12. Clutch arrangement according to one of Claims 8 to 11, **characterized in that** the electric machine (60) is configured as an internal rotor, the rotor (66) being arranged radially within the stator (62).

## Revendications

1. Ensemble d'embrayage (10) pour un véhicule hybride, comprenant
- un arbre d'entrée (12) et un arbre de sortie (14) disposé coaxialement à celui-ci,
- un embrayage à friction (20) et un embrayage à engagement positif (40) qui sont disposés fonctionnellement en parallèle entre l'arbre d'entrée (12) et l'arbre de sortie (14), dans lequel
- l'embrayage à friction (20) présente une unité à friction (22) pouvant être actionnée par des moyens d'actionnement associés (24), et dans lequel
- l'embrayage à engagement positif (40) présente une unité à engagement positif (42) pouvant être actionnée par des moyens d'actionnement (44) associés,
**caractérisé en ce que** l'embrayage à engagement positif (40) est réalisé sous la forme d'un embrayage centrifuge destiné à un actionnement automatique en fonction du régime, les moyens d'actionnement associés (44) étant en liaison fonctionnelle avec l'arbre d'entrée (12) ou l'arbre de sortie (14).

2. Ensemble d'embrayage selon l'une quelconque des revendications 1 à 3, **caractérisé en ce que** l'unité à engagement positif (42) présente un premier élément déplaçable (45d) muni d'un premier profil à engagement positif (45f) et un deuxième élément (46) muni d'un deuxième profil à engagement positif (46a), le premier élément (45d) étant en liaison d'entraînement en rotation avec l'arbre d'entrée (12) et le deuxième élément (46) étant en liaison d'entraînement en rotation avec l'arbre de sortie (14) et les profils à engagement positif (45f, 46a) pouvant être mis en prise mutuellement sous l'effet d'une force centrifuge par un dépassement d'un régime de couplage centrifuge prédéfinissable.

3. Ensemble d'embrayage selon la revendication 1, **caractérisé en ce que** le moyen d'actionnement (24) de l'embrayage à friction (20) est réalisé pour un actionnement électromagnétique.

4. Ensemble d'embrayage selon l'une quelconque des revendications 1 et 2, **caractérisé en ce que** l'unité à friction (22) présente un plateau de pression (26) déplaçable axialement, un ensemble de butée (28) muni d'un plateau de réaction (28a) et un disque de friction (30) disposé entre ceux-ci,
dans lequel le plateau de pression (26) et le plateau de réaction (28a) sont en liaison d'entraînement en rotation avec l'arbre d'entrée (12) ou l'arbre de sortie (14), et dans lequel le disque à friction (30) est en liaison d'entraînement en rotation avec l'autre arbre respectif de l'arbre d'entrée (12) et de l'arbre de sortie (14).

5. Ensemble d'embrayage selon l'une quelconque des revendications 1 à 4, **caractérisé en ce que** l'embrayage à engagement positif (40) et l'embrayage à friction (20) sont disposés l'un par rapport à l'autre de manière radialement échelonnée et se recouvrent l'un l'autre axialement au moins en partie.

6. Ensemble d'embrayage selon l'une quelconque des revendications 1 à 5, **caractérisé en ce qu'**une machine électrique (60) munie d'un rotor (66) et d'un stator (62) est prévue, le rotor (66) se trouvant en liaison d'entraînement en rotation avec l'arbre de sortie (14), et la machine électrique (60) présentant un espace de réception central (68) dans lequel l'embrayage à friction (20) et l'embrayage à engagement positif (40) sont reçus complètement ou du moins partiellement.

7. Ensemble d'embrayage selon la revendication 6, **caractérisé en ce que** l'ensemble de butée (28) de l'embrayage à friction (20) est réalisé sur le rotor (66) .

8. Ensemble d'embrayage selon la revendication 6 ou 7, **caractérisé en ce que** le stator (62) comprend un support de stator (64) avec une zone de paroi radiale (64b) délimitant l'espace de réception (68), ou **en ce que** l'espace de réception (68) est disposé à côté d'une zone de paroi radiale (64b) d'un composant supplémentaire, sur laquelle sont fixés les moyens d'actionnement (24, 44) de l'embrayage à friction (20) et de l'embrayage à engagement positif (40).

9. Ensemble d'embrayage selon l'une quelconque des revendications 6 à 8, **caractérisé en ce que** le rotor (66) présente un support de rotor (66a) s'étendant radialement, l'espace de réception (68) étant réalisé axialement entre la zone de paroi radiale (64b) et le support de rotor (68a).

10. Ensemble d'embrayage selon la revendication 9, **caractérisé en ce que** l'embrayage à friction (20) présente une unité de pilotage (80) pour piloter les moyens d'actionnement (24), l'unité de pilotage (80) étant disposée au niveau de la zone de paroi radiale (64b), en particulier à l'intérieur de l'espace de réception (68) .

11. Ensemble d'embrayage selon l'une quelconque des revendications 8 à 10, **caractérisé en ce que** l'arbre d'entrée (12) est monté au niveau de la zone de paroi radiale (64b) et l'arbre de sortie (14) est monté sur palier double par rapport à l'arbre d'entrée (12).

12. Ensemble d'embrayage selon l'une quelconque des revendications 8 à 11, **caractérisé en ce que** la machine électrique (60) est réalisée sous forme de rotor intérieur, le rotor (66) étant disposé radialement à l'intérieur du stator (62).
